# DEMANDE DE BREVET EUROPEEN

(11) **EP 2 213 430 A1**
(43) Date de publication de la demande: **04.08.2010**
(21) Numéro de dépôt: 09405007.7
(22) Date de dépôt: 13.01.2009
(51) Int. Cl.: B27K 5/00, A01M 1/24

(54) **Système de prévention et protection antixylophage**

(71) Demandeur: Grolimund, Eduard, 8952 Schlieren (CH)
(72) Inventeur: Grolimund, Eduard, 8952 Schlieren (CH)

(57) **Abrégé**

La présente invention concerne un procédé préventif et curatif destiné à protéger les bois des attaques « d'insectes xylophages » et en particulier Les bois de charpentes, les bois de forêts mêmes non coupés, ainsi que Tous les bois qui sont utilisés d'une manière générale en construction Di verses.

Les bois sont utilisés comme moyen de propagation pour transmettre Les signaux émis par les xylophages (Grignotages) vers des coupelles Fixées elles-mêmes sur ces mêmes bois. Celles-ci récupèrent par leurs « Caractéristiques appropriées » les impulsions mécaniques, en les Transposant en signaux électriques par l'intermédiaire d'un système piézo-électrique , puis en les renvoyant à l'unité centrale pour analyse, Via les câbles électriques de liaisons coupelles « capteurs transducteurs » Ces signaux renvoyés par les coupelles « capteurs transducteurs » à L'unité centrale qui aura analysé ces informations réinjectera à son tour Dans ces mêmes coupelles « capteurs transducteurs » si nécessaires, un Contre-signal spécifique en générant un champs d'énergie de surface, Ou effet dénommé « corona » par l'intermédiaire de ces dites coupelles « Capteurs transducteurs » et de leur câblage respectif.

Cette application et ce dispositif détruiront ainsi les systèmes nerveux des Dit insectes xylophages.

Le dispositif est **caractérisé en ce qu**'il se compose d'au moins une coupelle Équipée de deux connecteurs, fixés elle mêmes sur le bois et connectée par Des câbles électriques à une unité centrale, alimentée elle-même à son tour Par le secteur électrique 110/220 volts, batteries, ou autre source Électrique requise et définies selon les besoins.

La particularité essentielle de ce dispositif est qu'il est totalement inoffensif Pour l'être humain et son environnement habitable. Il ne répand pas de Produits chimiques dans la nature, qui par la suite sont difficiles à contrôler. Le dispositif ci-dessus est de surcroît très économique, simple à Mettre en oeuvre, installé correctement et définitivement, il ne Nécessite plus aucune dépense supplémentaire d'équipement.

## Description

1° Le domaine du procédé cité ci-dessous est destiné à la Préservations des cultures, des plantes, des forêts , et particulièrement à la Protection et au traitement des bois, notamment des bois de charpentes, Ossatures et toitures bois diverses, en permettant l'élimination
   Définitive des parasites xylophages, de leurs larves, et autres parasites.
2° L'état des techniques antérieures consistait généralement à utiliser des produits chimiques nocifs, des systèmes à radio fréquences, des micro-ondes, des ultrasons, de façon plus ou moins aléatoire, et sur un Spectre de fréquence le plus large possible. Les problèmes qui en ressortent Directement sont d'ordre sanitaire et d'ordre énergétique, car les produits Chimiques sont généralement nocifs pour l'humain et son environnement. Même problème pour les micro-ondes, ondes radio de certaines gammes de Fréquences. Du côté énergétique, il n'est pas nécessaire d'utiliser un canon De 105 mm pour éteindre une simple bougie. Il en est de même pour Résoudre ces problèmes de protection et de traitements des bois.
Il suffit d'utiliser juste ce qu'il faut, ni plus ni moins de ce qui est nécessaire. Les solutions à ces problèmes cités ci-dessus sont résolues par le nouveau dispositif décrit ci-dessous.
A/ les solutions nouvelles proposées sont d'une part : le ciblage ultra précis Des signaux sélectionnés en fonction des xylophages à neutraliser, et ceci Sans pollutions chimiques.
B / L'utilisation de l'effet « corona » ou champs d'énergie de surface Localisé.
C / Utilisation d'aimants supers puissants en néodyme, Itrium , Samarium C Dans les coupelles « récepteurs transducteurs » résolvant du coup tout les problèmes antérieurs de rendement d'énergie d'entrée/ sorties.
D / L'utilisation d'une unité centrale capable de gérer l'ensemble des Paramètres nécessaires à savoir :
   Générations de signaux spécifiques pour la destruction de xylophages, Larves et autres parasites dès lors qu'il y a activités des dits parasites. Reconnaissances informatiques (comparaisons par banques de données Internes et signaux recueilli sur le ou les sites à protéger) et ceci en fonction Du temps, de la saison, de la température, de l'hygrométrie, du contexte Énergétique environnemental, des essences de bois à traiter, leur densité et du lieu de l'installation du procédé cité ci-dessus.
   Tout cela permettant d'utiliser ce procédé de façon-optimum, afin d'obtenir Un fonctionnement qu'au moment opportun, d'où l'économie énergétique Recherchée obtenue.
   Le dispositif du procédé se caractérise par des coupelles métalliques Équipées de solénoïdes accordés 7 sur des noyaux métalliques 8, et d'un Système piézo-électrique en option pour la détection des parasites.
   Ces coupelles sont étanches 5 et fixées magnétiquement aux bois à traiter 0 , à l'aide d'une visserie conique appropriée 1, et d'aimants super puissants 2. Composés à base de néodyme-fer-bore, d'Itrium, de Samarium Cobalt.
   Ces coupelles sont reliées entre elles par des bornes bananes 6A et 6B ( Voir schéma coupe A-A d'un transducteur Picvert ci-joint) par des câbles Électriques reliées à une unité centrale,capable de générer des signaux Parfaitement adaptés à la destruction de famille de xylophages.

Le dispositif conforme à cette description est détaillé en schémas d'installation Voir pages ci-jointes ( A ET B ) , suivant l'exposé détaillé ci-dessus.

L'invention-ci décrite n'est pas limité au seul bois de charpente, planchers, meubles Ou autre bois, mais aussi aux arbres vivant des forêts, cultures, et aussi tout espaces à Protéger ou à traiter contre des parasites, espaces qui bien sûr aura préalablement Été sélectionné et équipé en conséquences .

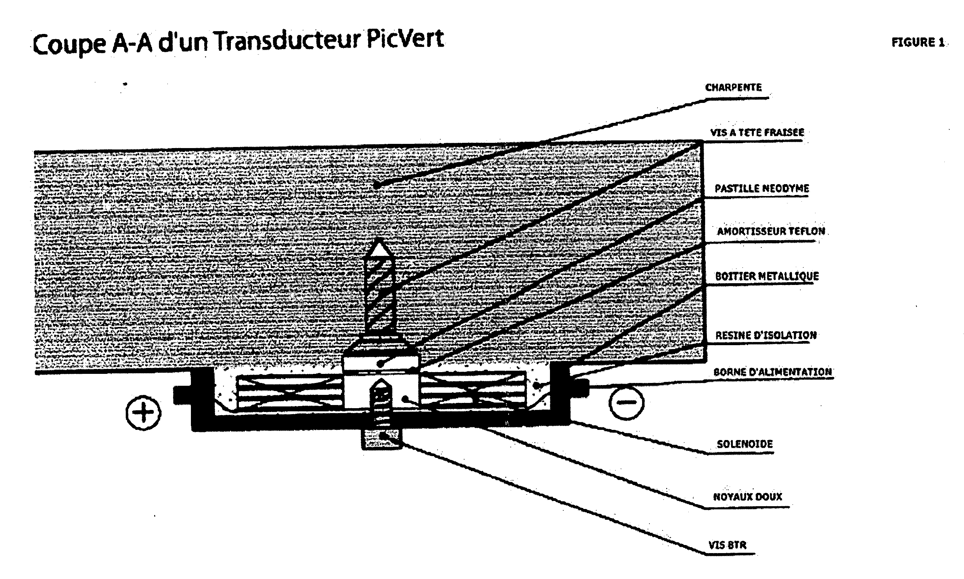

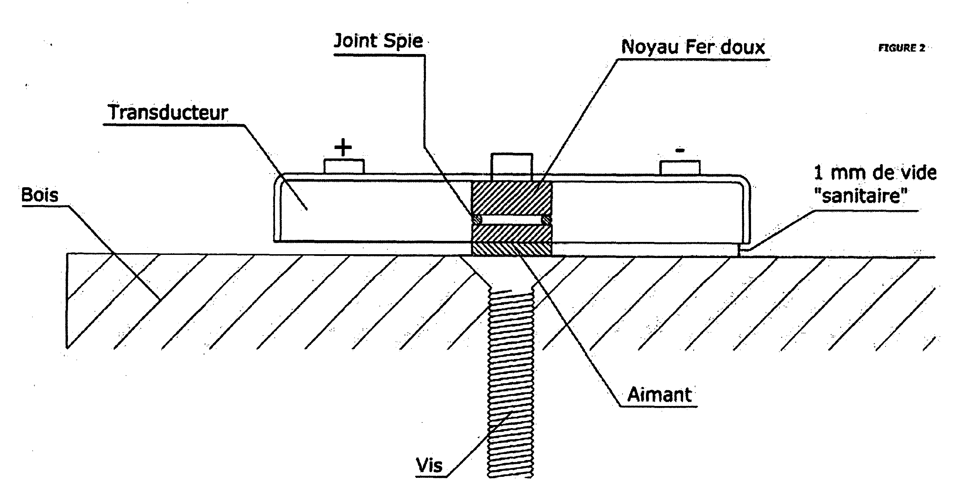

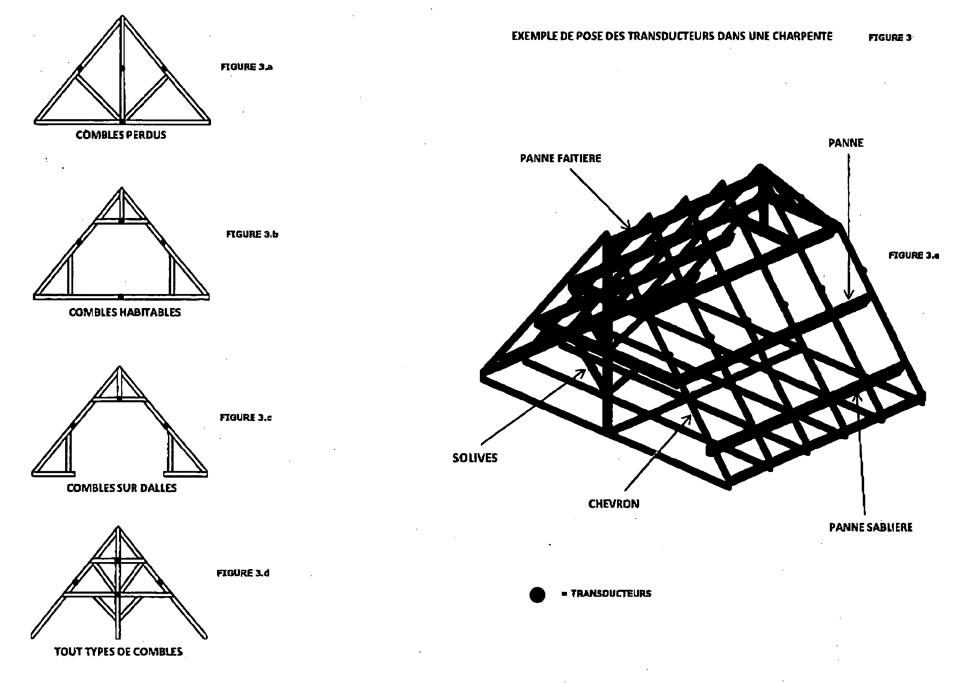

## Revendications

1. ° Procédé pour le traitement des bois, Notamment des poutres porteuses du bâtiment, et qui est destiné à détruire les parasites xylophages, et aussi de prévenir et neutraliser leur réapparition Le dispositif mis en place se **caractérise par** des coupelles métalliques Équipées de solénoïdes accordés sur des noyaux métalliques avec l'option d'un système piézo-électrique. Ces coupelles sont fixées magnétiquement Sur les bois à traiter à l'aide d'une visserie appropriée et d'un aimant en Néodyme super puissant. Les coupelles sont reliées entre elles par câbles électriques et à une unité centrale génératrice de signaux parfaitement Adaptés à la neutralisation de chaque type de famille de xylophages. L'émission et la réception de ces signaux sont réalisées conjointement par l'unité centrale, les coupelles, le câblage et l'alimentation électrique.

2. Procédé conforme à la revendication 1, Se **caractérise par le fait que** la propagation des signaux s'effectue Principalement en surface du bois (effet corona) durant un temps déterminé Par l'unité centrale et ceci en fonction de l'hygrométrie, de la température, De la saison ou moment propice au développement et à l'activité des dits Xylophages.

3. Dispositif pour le traitement des bois, notamment des Charpentes en bois contre les insectes xylophages par la mise en oeuvre d'un procédé conforme à la revendication 1&2 **caractérisé par le fait que** ce système n'utilise en aucun cas des produits chimiques tel qu'insecticides, Fongicides, ou autre biocides susceptibles de polluer et perturber l'équilibre Environnemental de l'habitation, et par conséquent de nuire directement Ou indirectement à l'être humain par les voies d'air, d'eaux ou de terres

4. Que le dispositif conforme à la revendication 1&2 Mis correctement en place et bien réglé ne nécessite aucune modification Technique et rajout matériel d'aucune sorte, hormis une mise à jour logiciel Au niveau de l'unité centrale pour acquisitions d'options supplémentaires. Les dites coupelles ont aussi la particularité de fonctionner en réception de Signaux par leur partie centrale en transformant les signaux d'attaques Mécaniques (grignotages des xylophages) en signaux électriques dirigés vers l'unité centrale, qui interprétera l'activité et répondra en conséquence. Cette action caractérise donc l'invention comme un procédé préventif et curatif.

5. Selon le dispositif conforme à la revendication 1 &2 Coupelles-unité centrale-câblage sont des émetteurs-récepteurs. En situation d'émission, l'utilisation d'ondes porteuses est générée automatiquement Par l'unité centrale en fonction des supports de propagation qui y incluent les fréquences de résonances de base du bois, à laquelle se rajoute une onde portée modulée laquelle va détruire les système nerveux des dits xylophages

6. Le dispositif conforme à la revendication 1&2 se **caractérise par** un ensemble minimum d'une coupelle munie de deux Connecteurs reliés par câbles électriques à l'unité centrale elle-même reliée À un système d'alimentation électrique 110/220 volts, batteries ou autre.

7. Le dispositif conforme à la revendication 1&2 n'est pas limité au seul bois de charpente, planchers, meubles ou autre, Mais aussi plantes, cultures, espace à protéger, tout arbres vivants de forêts.
